# FASCICULE DE BREVET EUROPEEN

(11) **EP 3 072 173 B1**
(45) Date de publication et mention de la délivrance du brevet: **11.10.2017**
(21) Numéro de dépôt: 14799807.4
(22) Date de dépôt: 19.11.2014
(51) Int. Cl.: H01B 3/30, H01G 2/10, H01M 2/20, H01M 2/10, H01M 10/653

(54) **MODULE DE STOCKAGE D'ÉNERGIE, COMPRENANT UNE PLURALITÉ D'ENSEMBLES DE STOCKAGE D'ÉNERGIE**
ENERGIESPEICHERMODUL MIT MEHREREN ENERGIESPEICHERANORDNUNGEN
ENERGY STORAGE MODULE, INCLUDING A PLURALITY OF ENERGY STORAGE ASSEMBLIES

(30) Priorité: 22.11.2013 FR 1361535
(43) Date de publication de la demande: 28.09.2016
(73) Titulaire: Blue Solutions, 29500 Ergué Gabéric (FR)
(72) Inventeur: LE GALL, Laurent, F-29500 Ergue Gaberic (FR); JUVENTIN, Anne-Claire, F-29000 Quimper (FR)
(74) Mandataire: Regimbeau
(86) Numéro de dépôt international: PCT/EP2014/075059
(87) Numéro de publication internationale: WO 2015/075092

(56) Documents cités:
- EP-A1- 1 109 237
- WO-A1-95/31012
- US-A1- 2010 081 048

## Description

L'invention a pour objet un module de stockage d'énergie, comprenant une pluralité d'ensembles de stockage d'énergie.

Un tel module comprend généralement la pluralité d'ensembles de stockage d'énergie disposés côte à côte et une enveloppe rigide destinée à entourer les ensembles de stockage. Chaque ensemble comprend au moins une paroi latérale fermée à chaque extrémité par une face extrême et les ensembles de stockage sont reliés électriquement deux à deux par des barrettes conductrices s'étendant sur au moins une face extrême de chaque ensemble. Les ensembles sont ainsi reliés électriquement en série. Les barrettes sont plus particulièrement agencées de sorte qu'une première barrette relie une première face extrême d'au moins un ensemble prédéterminé à une face extrême d'un premier ensemble adjacent et qu'une deuxième barrette relie une deuxième face de l'ensemble prédéterminé à une face extrême d'un deuxième ensemble adjacent. Tous les ensembles sont reliés électriquement de la sorte à l'exception de deux ensembles qui sont respectivement reliés à un seul ensemble adjacent d'une part et à une borne de sortie (respectivement positive ou négative) d'autre part du module.

Les ensembles étant reliés en série et n'étant donc pas au même potentiel que les ensembles adjacents (à l'exception des faces extrêmes reliées entre elles par une barrette conductrice), il est nécessaire de les isoler électriquement les uns des autres. Pour ce faire, on connaît dans l'état de la technique une plaque d'isolation positionnée au fond du module de façon à jouxter une face interne d'une paroi de l'enveloppe. Cette plaque d'isolation est généralement réalisée en un matériau thermiquement conducteur et électriquement isolant et comprend un logement pour chaque ensemble, les logements étant séparés par des entretoises permettant d'éviter tout contact entre les ensembles adjacents.

Une telle plaque est généralement réalisée en EPDM qui est un matériau assez onéreux mais est le seul qui permet d'obtenir une isolation suffisante. La mise en forme de ce matériau est également chère, notamment car sa conformation nécessite d'utiliser une plaque d'épaisseur importante. On cherche donc à réduire les coûts de fabrication associés au module et notamment à la fonction d'isolation de celui-ci.

L'invention permet de remplir l'objectif précité, à savoir de mettre au point un module de stockage d'énergie qui soit à la fois performant d'un point de vue de l'isolation électrique mais également moins coûteux que dans l'état de la technique.

A cet effet, l'invention a pour objet un module de stockage d'énergie comportant une pluralité d'ensembles de stockage d'énergie disposés côte à côte, et une enveloppe rigide destinée à entourer les ensembles de stockage, chaque ensemble comprenant au moins une paroi latérale fermée à chaque extrémité par une face extrême, dans lequel les ensembles de stockage sont reliés électriquement deux à deux par des barrettes conductrices s'étendant sur au moins une face extrême de chaque ensemble, les barrettes étant agencées de sorte qu'une barrette relie une première face extrême d'au moins un ensemble prédéterminé à une face extrême d'un premier ensemble adjacent et qu'une deuxième barrette relie une deuxième face de l'ensemble prédéterminé à une face extrême d'un deuxième ensemble adjacent. Le module comprend également au moins un organe d'isolation électrique, réalisé en un matériau électriquement isolant et comprenant un fond et un rebord s'étendant essentiellement perpendiculairement au fond et entourant celui-ci, chaque organe d'isolation électrique étant associé à une barrette et chaussé sur les faces extrêmes de deux ensembles adjacents reliées par la barrette de sorte que le fond soit parallèle aux faces extrêmes et que le rebord longe les parois latérales des deux ensembles en chevauchant celles-ci sur au moins une partie de leur hauteur.

De cette façon, les faces extrêmes constituant les bornes des ensembles se trouvant à un potentiel donné sont isolées des autres ensembles à des potentiels différents par l'organe d'isolation électrique du fait de la présence d'une entretoise de matériau électriquement isolant formée par le rebord de l'organe entre les ensembles adjacents et pas au même potentiel. L'organe isole également les ensembles de l'enveloppe rigide par le biais de son fond.

On peut alors supprimer la plaque d'isolation telle que décrite ci-dessus ou la conserver pour des besoins de conduction thermique mais en la simplifiant grandement, l'épaisseur de ladite plaque et sa forme n'étant plus du tout assujetties au mêmes contraintes que dans l'état de la technique, du fait de la présence des organes d'isolation électrique. Les coûts de fabrication relatif à cette plaque sont donc éliminés ou tout au moins considérablement réduits et les coûts des organes d'isolation électrique, qui peuvent être réalisés en un matériau moins coûteux, sont moindres que les économies réalisées sur les coûts liés à la plaque d'isolation. En effet, du fait qu'il n'entoure que deux ensembles, l'organe d'isolation électrique est en effet de conception simple et de fabrication économique.

En outre, grâce au rebord de l'organe d'isolation électrique, cet organe forme une coupelle qui permet de recueillir les liquides. Ainsi en cas de défaillance d'un ensemble de stockage d'énergie, qui entraîne une fuite d'électrolyte, l'électrolyte est contenu dans l'organe en forme de coupelle et ne génère pas de fuite de courant à l'extérieur du périmètre délimité par l'organe. Cela ne génère donc pas de court-circuit dans le module et améliore de fait la sécurité du module.

Le module selon l'invention peut également comprendre une ou plusieurs caractéristiques de la liste suivante :
- le module comprend au moins un ensemble relié à l'une de ses faces extrêmes à une borne de sortie du module par un connecteur de sortie, le module comportant en outre au moins un organe d'isolation électrique supplémentaire associé au connecteur de sortie, réalisé en un matériau électriquement isolant et comprenant un fond et un rebord s'étendant essentiellement perpendiculairement au fond et entourant celui-ci, l'organe d'isolation électrique supplémentaire étant chaussé sur la face extrême de l'ensemble reliée à la borne de sortie de sorte que le fond soit parallèle à ladite face extrême et que le rebord longe la paroi latérale de l'ensemble en chevauchant celle-ci sur au moins une partie de sa hauteur. Les ensembles situés aux extrémités de l'assemblage en série sont donc reliés respectivement aux bornes du module ne sont reliés à un autre ensemble qu'à une de leur face extrême. La face extrême reliée à la borne de sortie est tout de même isolée des autres ensembles et de l'enveloppe à l'aide d'un organe d'isolation électrique, celui-ci ayant une forme un peu particulière,
- en particulier, le connecteur de sortie est configuré en forme de L, une première paroi du connecteur longeant la face extrême de l'ensemble et une deuxième paroi perpendiculaire portant la borne de sortie, l'organe d'isolation électrique supplémentaire étant configuré pour entourer l'ensemble et le connecteur de sortie de sorte que son rebord longe la paroi latérale de l'ensemble et la deuxième paroi du connecteur,
- dans ce cas, le rebord de l'organe d'isolation électrique supplémentaire est de préférence configuré de sorte qu'il ne chevauche pas la borne de sortie, ce qui permet de la relier plus aisément à l'extérieur,
- le module comprend un nombre total d'organes d'isolation supérieur à la moitié du nombre d'ensembles de stockage du module, notamment égal au nombre d'ensembles du module augmenté de 1. Dans le premier cas, on peut a minima isoler tous les ensembles les uns des autres et limiter au maximum les coûts de fabrication. L'isolation vis-à-vis de l'enveloppe du module est alors réalisée au moins partiellement par un autre élément du module, notamment une plaque d'isolation telle que déjà évoquée. Dans le second cas, un organe d'isolation électrique est associé à chacune des barrettes et à chacun des connecteurs, ce qui permet de maximiser la sécurité dans le module et d'attribuer la fonction d'isolation des ensembles vis-à-vis de l'enveloppe également aux organes d'isolation électrique,
- le ou l'au moins un des organes d'isolation, de préférence chaque organe d'isolation, est réalisé en matière plastique, notamment un matériau thermoplastique tel que le polypropylène. Les propriétés isolantes et de mise en forme d'un tel matériau en font effectivement un matériau idéal pour la réalisation de l'organe. Il peut notamment être fabriqué par thermoformage, procédé simple et peu coûteux,
- une plaque réalisée en un matériau thermiquement isolant, réalisée notamment en EPDM, est interposée entre la barrette ou le connecteur de sortie et l'organe d'isolation électrique. associé. Ce mode de réalisation est particulièrement avantageux. En effet, d'une part, même si on utilise une plaque permettant d'améliorer l'isolation, on limite la quantité de plaque d'isolation utilisée et donc les coûts de fabrication. D'autre part, on évite des grésillements dus à des décharges partielles de l'ensemble de stockage dans l'organe, à cause de l'espace vide qui peut être présent entre les deux. L'organe d'isolation électrique étant en effet rigide il ne peut généralement pas tout à fait épouser la forme des ensembles alors que la plaque d'isolation, généralement plus souple, le peut plus facilement. On a donc constaté qu'une telle architecture du module permettait d'éviter les grésillements dans le module. Alternativement, comme indiqué, une plaque peut être interposée entre l'organe d'isolation électrique et l'enveloppe,
- au moins un ensemble comprend un élément tubulaire comprenant la ou les parois latérales et ouvert à au moins une de ses extrémités et un couvercle formant une face extrême de l'ensemble et apte à fermer la ou une extrémité de l'élément tubulaire. L'élément tubulaire est plus particulièrement mais pas exclusivement de section circulaire,
- dans ce cas, de préférence, le couvercle comprend une paroi formant la face extrême et une jupe entourant ladite paroi et entourant la ou les parois latérales de l'élément tubulaire. Le rebord de l'organe d'isolation électrique est alors notamment de hauteur supérieure ou égale à la hauteur de la jupe du couvercle de l'ensemble. En recouvrant uniquement la jupe du couvercle qui est de diamètre supérieur au reste de l'ensemble, on est certains en effet que les ensembles adjacents ne rentreront pas en contact. Quoi qu'il en soit, le rebord recouvre l'ensemble sur une portion de préférence inférieure à 20% de sa hauteur afin d'assurer une bonne isolation tout en minimisant les coûts de fabrication des organes d'isolation électrique,

L'invention a également pour objet un procédé de fabrication d'un module de stockage d'énergie comportant une pluralité d'ensembles de stockage d'énergie disposés côte à côte, et une enveloppe rigide destinée à entourer les ensembles de stockage, chaque ensemble comprenant au moins une paroi latérale et fermée à chaque extrémité de la paroi latérale par une face extrême, le procédé comportant les étapes suivantes :
- on relie électriquement les ensembles de stockage deux à deux par des barrettes conductrices s'étendant respectivement sur au moins une face extrême de chaque ensemble, de sorte qu'une barrette relie une première face extrême d'au moins un ensemble prédéterminé à un premier ensemble adjacent et qu'une deuxième barrette relie une deuxième face de l'ensemble prédéterminé à un deuxième ensemble adjacent,
- on place au moins un organe d'isolation électrique, réalisé en un matériau électriquement isolant et comprenant un fond et un rebord s'étendant essentiellement perpendiculairement au fond et entourant celui-ci, sur les faces extrêmes de deux ensembles adjacents reliées par la barrette de sorte que le fond soit parallèle aux faces extrêmes et que le rebord longe les parois latérales des deux ensembles en chevauchant celles-ci sur au moins une partie de leur hauteur.

De préférence, on relie au moins un ensemble à l'une de ses faces extrêmes à une borne de sortie du module par un connecteur de sortie et on place un organe d'isolation électrique supplémentaire, réalisé en un matériau électriquement isolant et comprenant un fond et un rebord s'étendant essentiellement perpendiculairement au fond et entourant celui-ci, sur la face extrême de l'ensemble reliée à la borne de sortie de sorte que le fond soit parallèle à la face extrême et que le rebord longe la paroi latérale de l'ensemble en chevauchant celles-ci sur au moins une partie de sa hauteur

De préférence, on interpose une plaque d'isolation entre au moins une barrette ou un connecteur de sortie et l'organe d'isolation électrique associé.

On va maintenant décrire un exemple non limitatif d'un module selon un mode de réalisation de l'invention à l'aide des dessins dans lesquels :
- la figure 1 représente une vue en perspective et en éclaté d'un module selon ce mode de réalisation,
- la figure 2 est une vue en perspective du connecteur de sortie du module selon ce mode de réalisation.

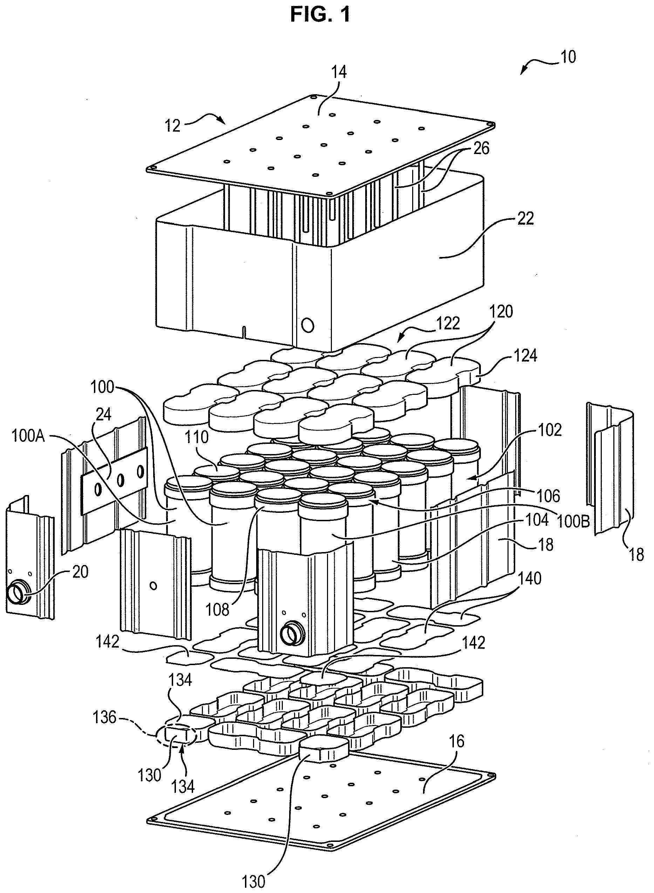

Comme on le voit sur la figure 1, le module 10 comprend une enveloppe 12 dans laquelle sont logés des ensembles de stockage d'énergie électrique 100. Cette enveloppe comprend deux parois supérieure 14 et inférieure 16 ainsi qu'une paroi latérale 18 réalisée en plusieurs portions assemblées. Les parois sont réalisées notamment en un matériau métallique tel que l'aluminium.

Chaque ensemble 100 comporte un boîtier 102 contenant un élément de stockage d'énergie électrique et un électrolyte dont est généralement imprégné l'élément de stockage d'énergie.

L'élément est par exemple une bobine constituée de complexes et de séparateur enroulés conjointement en spire pour former la bobine. On entend, dans le cadre de la présente invention, par « complexe », un empilement comportant au moins deux couches, notamment deux couches d'électrodes destinées à former les électrodes positive et négative du complexe.

Le boîtier comprend un corps 104 ou élément tubulaire, de forme cylindrique et comprenant une paroi latérale. L'axe de l'élément tubulaire 104 correspond à l'axe longitudinal de l'ensemble. L'élément tubulaire est ouvert à ses deux extrémités. Alternativement, il peut également comprendre un fond à l'une de ses extrémités et être ouverte à son autre extrémité pour permettre l'insertion de l'élément de stockage dans l'enveloppe. Dans ce cas, la face externe du fond est de préférence sensiblement plane - pour permettre le soudage d'une barrette en tout point de sa surface. Il peut également être d'une forme autre que cylindrique, notamment parallélépipédique. Il est toutefois de préférence symétrique relativement à l'axe longitudinal de l'ensemble.

Chaque extrémité ouverte du corps, ici les deux extrémités du corps, est fermée par un couvercle 106.Chaque couvercle 106 comprend une paroi couvrante pour fermer l'extrémité ouverte du corps 1. Cette paroi couvrante comprend deux faces :
- une face interne destinée à être connectée à l'élément de stockage d'énergie, et
- une face externe destinée à être liée, notamment par soudage, à une barrette conductrice 110, dont on détaillera le rôle et la configuration dans la suite.

De préférence, la face externe du couvercle est sensiblement plane. Plus précisément, cette face externe est de préférence dépourvue de pion en son centre et de bord à sa périphérie. Ceci permet de maximiser la surface du couvercle pouvant être soudée à la barrette. On augmente ainsi la latitude de soudage de la barrette sur le couvercle, la position de la barrette pouvant varier assez considérablement relativement à la position de l'ensemble sur lequel elle est soudée, comme il sera décrit plus en détail dans la suite. L'invention pourrait toutefois être réalisée avec un ensemble comprenant un pion sur sa face externe située à au moins l'une de ses extrémités. La face externe du couvercle constitue la face extrême de l'ensemble.

La paroi couvrante de chacun des couvercles constitue une borne de l'ensemble, respectivement positive ou négative, reliée électriquement respectivement aux électrodes de même signe de l'ensemble, respectivement positives ou négatives. Pour assurer le bon fonctionnement de l'ensemble, les couvercles sont bien entendu isolés l'un de l'autre, notamment par des joints agencés entre le couvercle 106 et l'élément tubulaire 104.

Chaque couvercle peut également comprendre une jupe 108 à la périphérie de la paroi couvrante, cette jupe étant destinée à recouvrir partiellement la paroi latérale de l'enveloppe en l'entourant sur une partie de sa hauteur.

Avantageusement, le boîtier 102, notamment son corps 104, peut comprendre un soufflet situé notamment au niveau de la paroi latérale. Ce soufflet, non représenté sur les figures, permet de faire varier la hauteur de l'ensemble afin de compenser les éventuelles variations de hauteur des différents ensembles, liées notamment aux tolérances de fabrication des différentes pièces ou encore aux jeux de montage résultant de leur assemblage.

On remarquera que les ensembles sont disposés côte à côte dans le module de sorte que leurs axes longitudinaux soient alignés et leurs faces extrêmes sensiblement parallèles aux parois supérieure et inférieure 14, 16 de l'enveloppe du module.

Comme indiqué précédemment, les ensembles du module sont reliés deux à deux au niveau de leurs extrémités supérieure et inférieure en utilisant des barrettes 110. Grâce à ces barrettes, les ensembles sont reliés électriquement en série. autrement dit, la borne négative d'un ensemble est reliée à la borne positive d'un ensemble adjacent et sa borne positive est reliée à la borne négative d'un autre ensemble adjacent.

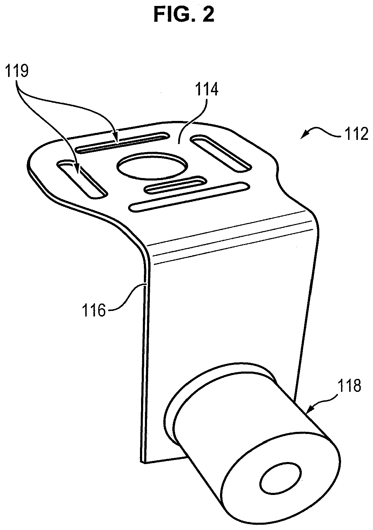

Plus précisément, à l'exception de deux ensembles d'extrémités référencés 100A, 100B sur la figure 1, chaque ensemble comprend une première face extrême reliée par une première barrette conductrice 110 à une face extrême d'un premier ensemble adjacent et une deuxième face extrême reliée par une deuxième barrette conductrice 110 à une face extrême d'un deuxième ensemble adjacent, distinct du premier. Concernant les deux ensembles d'extrémité 100A, 100B, ils sont reliés à une première face extrême par une barrette 110 à une face extrême d'un ensemble adjacent. Toutefois, à leur face extrême opposée, ils sont reliés à une borne de sortie 118 par le biais d'un connecteur de sortie 112 de forme particulière et visible sur la figure 2. Sur le module de la figure 1, un connecteur tel que 112 est mis en place sur les faces extrêmes situées à l'extrémité inférieure des ensembles d'extrémité 100A, 100B.

Chaque barrette 110 est par exemple une plaque sensiblement plane s'étendant longitudinalement. Elle comprend notamment une première portion superposée à un premier ensemble et une deuxième portion superposée à un deuxième ensemble, un amincissement transversal étant ménagé entre les deux portions. La barrette 110 peut être soudée par tous moyens sur la face extrême du couvercle, notamment par soudure LASER ou par soudure FSW, comme cela est connu.

Elle pourrait également être composée par exemple de portions de rigidités différentes, même si cela n'est pas essentiel pour parvenir à réaliser l'invention. Notamment, chaque barrette peut comprendre :
- deux portions rigides, chacune étant destinée à être mise en contact avec un couvercle respectif de deux ensembles de stockage adjacents,
- une portion déformable entre les deux portions rigides.

La présence d'une portion déformable sur la barrette permet de faciliter sa déformation en pliage sans rupture en vue de sa liaison sur l'ensemble, notamment en garantissant l'appui de la barrette sur les ensembles même si leurs hauteurs sont différentes. Ceci permet de garantir la qualité de la liaison. Ceci est particulièrement avantageux dans le cas où la liaison de la barrette sur l'ensemble est réalisée par soudage, notamment LASER, puisqu'un contact intime est nécessaire pour réaliser efficacement un soudage à l'aide de cette technologie.

La différence de rigidité des différentes portions constituant la barrette peut être obtenue par une variation de l'épaisseur de la plaque longitudinalement. Notamment, la portion déformable peut être une portion amincie d'épaisseur inférieure à l'épaisseur des portions rigides. Elle peut également être réalisée à l'aide d'une pliure ou d'un décrochement en partie centrale de la barrette. La barrette peut également être composée d'une pluralité de feuilles superposées et reliées entre elles, notamment par soudage, à chacune de leurs extrémités ou d'une pluralité de fils tressés ensembles pour former la barrette, ce qui confère également une bonne flexibilité à la barrette dans les endroits où elle n'est pas reliée aux ensembles.

Le connecteur de sortie 112 est quant à lui en forme de L comprenant une première paroi 114 destinée à être disposée sur et soudée à la face extrême d'un ensemble et une deuxième paroi 116 essentiellement perpendiculaire dirigée vers l'autre face extrême de l'ensemble et comprenant sur une face destinée à être orientée vers l'extérieur lorsque le connecteur est placé sur l'ensemble une borne de sortie 118 essentiellement cylindrique en saillie de la deuxième paroi du connecteur 112. La borne de sortie est destinée à s'engager dans un orifice 20 de la paroi latérale de l'enveloppe du module.

Comme on le voit également sur la figure 2, le connecteur de sortie 112 ou la barrette 110 peut comprendre des amincissements 119 sur la portion destinée à être disposée sur un ensemble pour faciliter le soudage du connecteur ou de la barrette à l'ensemble, le soudage étant effectué au niveau de ces amincissements de la barrette.

Le module comprend également une pluralité d'organes d'isolation électrique 120, un organe étant associé à une barrette conductrice 110. Chaque organe d'isolation 120 comprend pour ce faire un fond 122 et un rebord 124 entourant le fond et est chaussé sur les faces extrêmes des ensembles reliées par la barrette. En réalité, il est superposé à la barrette 110 qui relie les ensembles. Le fond 122 est ainsi parallèle aux faces extrêmes des ensembles et à la barrette associée alors que le rebord 124 est conformé pour entourer les parois latérales des deux ensembles sur une partie de leur hauteur, et est notamment dimensionné pour recouvrir la jupe 108 du couvercle de chacun des ensembles. L'organe d'isolation 120 est de forme complémentaire des deux ensembles reliés par la barrette 110 de sorte que le rebord 124 longe la jupe 108 des couvercles desdits ensembles. Il forme une coupelle délimitant un logement dans lequel sont agencés les ensembles. Comme on le voit sur la figure 1, les organes d'isolation sont associés à chaque barrette du module et sont donc positionnés aux extrémités supérieure et inférieure des ensembles mais de tels organes pourraient n'être associés qu'à certaines barrettes (1 sur 2 par exemple), ce qui permettrait tout de même d'isoler les ensembles les uns des autres.

Le module comprend également deux d'organes d'isolation électrique supplémentaires 130, associés respectivement à chaque connecteur de sortie 112. Ces organes comprennent également un rebord 134 et un fond 132 et sont superposés à la première paroi du connecteur de sortie 112, et à la face extrême correspondante de l'ensemble 100A, 100B. Il forme également une coupelle délimitant un logement dans lequel est agencé l'ensemble. Les organes 130 sont donc conformés pour que le rebord n'entoure qu'un ensemble 100A, 100B et non deux ensembles accolés. Le rebord est conformé pour longer la paroi latérale des ensembles et également conformé pour longer la face externe de la deuxième paroi du connecteur de sortie 112et comprend à cet effet un petit décrochement 136, comme cela est visible sur la figure 1. Le rebord 134 de ce connecteur de sortie 112 est de hauteur choisie pour recouvrir la jupe 108 du couvercle de chacun des ensembles 100A, 100B mais pas en revanche la borne de sortie 118 afin de ne pas gêner son positionnement dans l'orifice 20 de l'enveloppe 12.

Chacun des organes d'isolation 120, 130 est réalisé en matière plastique, notamment en matière thermoplastique tel que le polypropylène. Il peut notamment être constitué d'un film de polypropylène d'épaisseur assez mince, soit environ 250 microns et thermoformé.

Comme on le voit également sur la figure 1, une plaque d'isolation 140, 142 est insérée entre chaque barrette 110 ou connecteur de sortie 112 et l'organe d'isolation électrique 120, 130 associé, en partie inférieure du module. Cette plaque d'isolation est réalisée en un matériau thermiquement conducteur et électriquement isolant, tel que l'EPDM. Dans le mode de réalisation, elle est placée uniquement au niveau de l'extrémité inférieure du module, qui constitue la face d'évacuation de la chaleur du module mais une telle plaque d'isolation pourrait également être placée entre les barrettes ou connecteurs et les organes associés en partie supérieure du module.

Chacune de ces plaques 140, 142 est conformée pour épouser la forme du fond de l'organe 120 ou 130 et également celle de la barrette ou du connecteur associé. Elle permet d'améliorer l'isolation électrique tout en dirigeant la chaleur générée par les ensembles vers l'extérieur du module. Son action thermique est plus efficace à l'intérieur de l'organe d'isolation électrique qu'à l'extérieur car elle est meilleure conductrice que le matériau utilisé pour réaliser l'organe d'isolation électrique. De plus, la placer à l'intérieur de l'organe permet d'économiser de la matière constituant cette plaque (relativement à un agencement de la plaque à l'extérieur). La présence de cette plaque 140, 142 permet également d'éviter les micro-décharges entre les ensembles et l'organe d'isolation électrique.

Le module comprend également, pour compléter l'isolation entre les ensembles 100 et l'enveloppe 12, une bande de mousse isolante 22 enroulée autour des ensembles en longeant les parois latérales 18 de l'enveloppe afin d'isoler électriquement les ensembles des parois latérales 18 de l'enveloppe. De la mousse isolante peut également être collée sur la paroi supérieure 14 de l'enveloppe, au niveau de la face interne de ladite paroi, même si cela n'est pas nécessaire.

Lesdites parois latérales 18 portent également au moins une carte électronique 24 sur une face interne. Ladite carte est reliée électriquement aux ensembles par des câbles non représentés sur les figures et permet notamment d'effectuer un équilibrage des ensembles afin qu'ils se déchargent de façon la plus homogène possible.

Le module comprend également des renforts 26 constitués par des barreaux essentiellement verticaux et destinés à être agencés entre les ensembles 100, lesdits barreaux 26 reliant les parois supérieures 14 et inférieure 16 du module afin de renforcer la tenue mécanique du module.

On va maintenant décrire un procédé de fabrication du module tel que représenté à la figure 1. Tout d'abord, on forme des paires d'ensembles 100 et on relie par soudage ces ensembles deux à deux à l'aide des barrettes conductrices. On fait de même en soudant les connecteurs de sortie 112 sur deux ensembles isolés 100A, 100B.

On positionne ensuite les plaques d'isolation 140 dans les organes d'isolation 120, 130 de sorte que la plaque 140 soit placée dans le logement et entourée par les rebords 124, 134 de l'organe dans lequel elle est placée. La plaque a préalablement été découpée pour être de forme identique à celle du fond de l'organe 120, 130.

L'organe 120 muni de la plaque 140 est ensuite positionné sur les paires d'ensembles reliées par la barrette 110 de façon à être superposé à la barrette 110 avec les rebords 124 chevauchant partiellement les parois latérales des ensembles alors que l'organe 130 également muni d'une plaque 142 est positionné sur les ensembles isolés munis du connecteur de sortie 112 de façon à être superposé au connecteur de sortie, avec les rebords 134 chevauchant partiellement la paroi latérale de l'ensemble.

On retourne ensuite les ensembles munis des organes d'isolation et on les dispose côte à côte sur une paroi 16 de l'enveloppe formant paroi inférieure, les ensembles 100A, 100B occupant des emplacements privilégiés de sorte que la borne de sortie de l'ensemble soit en regard de l'orifice 20 de la paroi latérale 18. Alternativement, on dispose les ensembles côte à côte et on pose la paroi 16 sur ces ensembles et on retourne l'assemblage de ces différents éléments.

On soude ensuite les barrettes 110 sur les faces supérieures des ensembles accolés de sorte que chacun des ensembles déjà relié à un ensemble adjacent par une barrette au niveau de sa face extrême inférieure soit relié à un autre ensemble adjacent par la barrette située au niveau de sa face extrême supérieure, ce qui permet de relier électriquement tous les ensembles en série entre les bornes de sortie 118 du module. On positionne également des organes d'isolation électrique 120 au niveau de la face supérieure des ensembles, de sorte qu'un organe 120 soit associé à chaque barrette 110. Avant soudage des barrettes, une étape de pré-positionnement des bornes de sortie relativement à la paroi latérale 18 et aux orifices 20 a également pu être effectuée.

On entoure ensuite les ensembles de la bande de mousse 22 et on place les renforts 26 dans le module. On positionne enfin les parois latérales 18 sur lesquels ont été pré-montés les différents éléments qu'elles portent (carte électronique 24, joint d'étanchéité relatif à l'orifice 20 d'accueil des bornes de sortie). On assemble enfin les parois 14, 16, 18 du module et on fixe les renforts 26, par exemple par vissage aux parois supérieure et inférieure de l'enveloppe.

Le module selon ce mode de réalisation de l'invention permet donc de diminuer les coûts de fabrication relatifs au module tout en assurant au module une bonne isolation électrique entre les ensembles et entre les ensembles et l'enveloppe du module.

Le module selon l'invention pourrait comprendre de nombreuses variantes relativement à ce qui a été décrit à l'aide des figures, ces variantes entrant tout de même dans le cadre des revendications. Par exemple, la forme de l'ensemble, du connecteur et de la barrette n'est pas limitée à ce qui a été décrit. De fait, la forme des organes d'isolation n'est pas non plus limitée à ce qui a été décrit. De plus, un organe d'isolation n'est pas forcément associé à chacune des barrettes et chacun des connecteurs. On notera également que la plaque d'isolation pourrait ne pas être combinée à l'organe d'isolation en fonction du matériau choisi pour cet organe. Elle pourrait également être située entre les organes d'isolation et l'enveloppe du module. Les parois de l'enveloppe pourraient également être conformées autrement, plusieurs parois étant par exemple d'un seul tenant. Les renforts sont également optionnels, ainsi que la bande de mousse et la carte électronique. Ces derniers éléments peuvent également être configurés autrement que ce qui a été représenté sur la figure 1.

## Revendications

1. Module de stockage d'énergie (10) comportant une pluralité d'ensembles de stockage d'énergie (100) disposés côte à côte, et une enveloppe rigide (12) destinée à entourer les ensembles de stockage, chaque ensemble comprenant au moins une paroi latérale fermée à chaque extrémité par une face extrême, dans lequel les ensembles de stockage sont reliés électriquement deux à deux par des barrettes conductrices (110) s'étendant sur au moins une face extrême de chaque ensemble, les barrettes étant agencées de sorte qu'une barrette relie une première face extrême d'au moins un ensemble prédéterminé à une face extrême d'un premier ensemble adjacent et qu'une deuxième barrette relie une deuxième face de l'ensemble prédéterminé à une face extrême d'un deuxième ensemble adjacent, **caractérisé en ce que** le module comprend également au moins un organe d'isolation électrique (120), réalisé en un matériau électriquement isolant et comprenant un fond (122) et un rebord (124) s'étendant essentiellement perpendiculairement au fond et entourant celui-ci, chaque organe d'isolation électrique (120) étant associé à une barrette (110) et chaussé sur les faces extrêmes de deux ensembles adjacents reliées par la barrette de sorte que le fond soit parallèle aux faces extrêmes et que le rebord longe les parois latérales des deux ensembles en chevauchant celles-ci sur au moins une partie de leur hauteur.

2. Module selon la revendication précédente, comprenant au moins un ensemble (100A, 100B) relié à l'une de ses faces extrêmes à une borne de sortie (118) du module par un connecteur de sortie (112), le module comportant en outre au moins un organe d'isolation électrique supplémentaire (130) associé au connecteur de sortie (112), réalisé en un matériau électriquement isolant et comprenant un fond (132) et un rebord (134) s'étendant essentiellement perpendiculairement au fond et entourant celui-ci, l'organe d'isolation électrique supplémentaire étant chaussé sur la face extrême de l'ensemble reliée à la borne de sortie de sorte que le fond soit parallèle à ladite face extrême et que le rebord longe la paroi latérale de l'ensemble en chevauchant celle-ci sur au moins une partie de sa hauteur.

3. Module selon la revendication précédente, dans lequel le connecteur de sortie (112) est configuré en forme de L, une première paroi (114) du connecteur longeant la face extrême de l'ensemble et une deuxième paroi (116) perpendiculaire portant la borne de sortie (118), l'organe d'isolation électrique supplémentaire (130) étant configuré pour entourer l'ensemble et le connecteur de sortie de sorte que son rebord (134) longe la paroi latérale de l'ensemble et la deuxième paroi du connecteur.

4. Module selon la revendication précédente, dans lequel le rebord (134) de l'organe d'isolation électrique supplémentaire est configuré de sorte qu'il ne chevauche pas la borne de sortie (118).

5. Module selon l'une quelconque des revendications précédentes, comprenant un nombre total d'organes d'isolation (120, 130) supérieur à la moitié du nombre d'ensembles de stockage (100) du module, notamment égal au nombre d'ensembles du module augmenté de 1.

6. Module selon l'une quelconque des revendications précédentes, dans lequel le ou l'au moins un des organes d'isolation électrique (120, 130) est réalisé en matière plastique, notamment un matériau thermoplastique tel que le polypropylène.

7. Module selon l'une quelconque des revendications précédentes, dans lequel une plaque (140, 142) réalisée en un matériau thermiquement isolant, réalisée notamment en EPDM, est interposée entre la barrette (110) ou le connecteur de sortie (112) et l'organe d'isolation électrique (120,130) associé.

8. Module selon l'une quelconque des revendications précédentes, dans lequel au moins un ensemble comprend un élément tubulaire (104) comprenant la ou les parois latérales et ouvert à au moins une de ses extrémités et un couvercle (106) formant une face extrême de l'ensemble et à fermer la ou une extrémité de l'élément tubulaire.

9. Module selon la revendication précédente, dans lequel le couvercle (106) comprend une paroi formant la face extrême et une jupe (108) entourant ladite paroi et entourant la ou les parois latérales de l'élément tubulaire, le rebord (124, 134) de l'organe d'isolation électrique étant de hauteur supérieure ou égale à la hauteur de la jupe du couvercle de l'ensemble.

10. Procédé de fabrication d'un module de stockage d'énergie (10) comportant une pluralité d'ensembles de stockage d'énergie (100) disposés côte à côte, et une enveloppe rigide (12) destinée à entourer les ensembles de stockage, chaque ensemble comprenant au moins une paroi latérale et fermée à chaque extrémité de la paroi latérale par une face extrême, le procédé comportant les étapes suivantes :
- on relie électriquement les ensembles de stockage (100) deux à deux par des barrettes conductrices (110) s'étendant respectivement sur au moins une face extrême de chaque ensemble, de sorte qu'une barrette relie une première face extrême d'au moins un ensemble prédéterminé à un premier ensemble adjacent et qu'une deuxième barrette relie une deuxième face de l'ensemble prédéterminé à un deuxième ensemble adjacent,
- on place au moins un organe d'isolation électrique (120), réalisé en un matériau électriquement isolant et comprenant un fond (122) et un rebord (124) s'étendant essentiellement perpendiculairement au fond et entourant celui-ci, sur les faces extrêmes de deux ensembles adjacents reliées par la barrette de sorte que le fond soit parallèle aux faces extrêmes et que le rebord longe les parois latérales des deux ensembles en chevauchant celles-ci sur au moins une partie de leur hauteur.

11. Procédé selon la revendication précédente, dans lequel on relie au moins un ensemble (100A, 100B) à l'une de ses faces extrêmes à une borne de sortie (118) du module par un connecteur de sortie (112) et on place un organe d'isolation électrique supplémentaire (130), réalisé en un matériau électriquement isolant et comprenant un fond (132) et un rebord (134) s'étendant essentiellement perpendiculairement au fond et entourant celui-ci, sur la face extrême de l'ensemble reliée à la borne de sortie de sorte que le fond soit parallèle à la face extrême et que le rebord longe la paroi latérale de l'ensemble en chevauchant celles-ci sur au moins une partie de sa hauteur.

12. Procédé selon la revendication précédente, dans lequel on interpose une plaque d'isolation (140, 142) entre au moins une barrette (110) ou un connecteur de sortie (112) et l'organe d'isolation électrique associé (120, 130)

## Patentansprüche

1. Modul zur Speicherung von Energie (10), umfassend eine Vielzahl von Einheiten zur Speicherung von Energie (100), die Seite an Seite angeordnet sind, und eine starre Hülle (12), die ausgelegt ist, um die Einheiten zur Speicherung zu umgeben, wobei jede Einheit mindestens eine seitliche Wand umfasst, die an jedem Ende durch eine äußere Seite geschlossen ist, wobei die Einheiten zur Speicherung elektrisch zu zweit durch leitende Spangen (110) verbunden sind, die sich auf mindestens einer äußeren Seite jeder Einheit erstrecken, wobei die Spangen derart positioniert sind, dass eine Spange eine erste äußere Seite von mindestens einer vorbestimmten Einheit mit einer äußeren Seite einer ersten benachbarten Einheit verbindet, und dass eine zweite Spange eine zweite Seite der vorbestimmten Einheit mit einer äußeren Seite einer zweiten benachbarten Einheit verbindet, **dadurch gekennzeichnet, dass** das Modul auch mindestens ein Organ zur elektrischen Isolierung (120) umfasst, hergestellt aus einem elektrisch isolierenden Material und umfassend einen Boden (122) und einen Rand (124), der sich im Wesentlichen senkrecht zum Boden erstreckt und diesen umgibt, wobei jedes Organ zur elektrischen Isolierung (120) mit einer Spange (110) assoziiert ist und auf den äußeren Seiten von zwei benachbarten Einheiten, die durch die Spange verbunden sind, aufgesetzt ist, so dass der Boden parallel zu den äußeren Seiten ist, und dass der Rand entlang der seitlichen Wände der zwei Einheiten verläuft, indem er diese auf mindestens einem Teil ihrer Höhe überlappt.

2. Modul nach dem vorhergehenden Anspruch, umfassend mindestens eine Einheit (100A, 100B), die an einer ihrer äußeren Seiten mit einer Ausgangsklemme (118) des Moduls durch einen Ausgangsverbinder (112) verbunden ist, wobei das Modul außerdem mindestens ein zusätzliches Organ zur elektrischen Isolierung (130) umfasst, das mit dem Ausgangsverbinder (112) assoziiert ist, hergestellt aus einem elektrisch isolierenden Material und umfassend einen Boden (132) und einen Rand (134), der sich im Wesentlichen senkrecht zum Boden erstreckt und diesen umgibt, wobei das zusätzliche Organ zur elektrischen Isolierung auf die äußere Seite der Einheit aufgesetzt ist, die mit der Ausgangsklemme derart verbunden ist, dass der Boden parallel zu der äußeren Seite ist, und dass der Rand entlang der seitlichen Wand der Einheit verläuft indem er diese auf mindestens einem Teil der Höhe überlappt.

3. Modul nach dem vorhergehenden Anspruch, wobei der Ausgangsverbinder (112) in Form eines L konfiguriert ist, wobei eine erste Wand (114) des Verbinders entlang der äußeren Seite der Einheit verläuft und eine zweite senkrechte Wand (116) die Ausgangsklemme (118) trägt, wobei das zusätzliche Organ zur elektrischen Isolierung (130) konfiguriert ist, um die Einheit und den Ausgangsverbinder zu umgeben, so dass der Rand (134) entlang der seitlichen Wand der Einheit und der zweiten Wand des Verbinders verläuft.

4. Modul nach dem vorhergehenden Anspruch, wobei der Rand (124) des zusätzlichen Organs zur elektrischen Isolierung derart konfiguriert ist, dass er die Ausgangsklemme (118) nicht überlappt.

5. Modul nach einem der vorhergehenden Ansprüche, umfassend eine Gesamtanzahl von Organen zur Isolierung (120, 130), die größer als die Hälfte der Anzahl von Einheiten zur Speicherung (100) des Moduls ist, insbesondere gleich der Anzahl von Einheiten des Moduls, erhöht um 1.

6. Modul nach einem der vorhergehenden Ansprüche, wobei das oder das mindestens eine der Organe zur elektrischen Isolierung (120, 130) aus einem Kunststoffmaterial hergestellt ist, insbesondere aus einem thermoplastischen Material wie z. B. Polypropylen.

7. Modul nach einem der vorhergehenden Ansprüche, wobei eine Platte (140, 142), hergestellt aus einem thermisch isolierenden Material, insbesondere hergestellt aus EPDM, zwischen die Spange (110) oder den Ausgangsverbinder (112) und das assoziierte Organ zur elektrischen Isolierung (120, 130) gestellt ist.

8. Modul nach einem der vorhergehenden Ansprüche, wobei mindestens eine Einheit ein rohrförmiges Element (104) umfasst, umfassend die seitliche Wand oder die seitlichen Wände und offen auf mindestens einem seiner Enden, und einen Deckel (106), der eine äußere Seite der Einheit bildet und zum Schließen des oder eines Endes des rohrförmigen Elements dient.

9. Modul nach dem vorhergehenden Anspruch, wobei der Deckel (106) eine Wand umfasst, die die äußere Seite bildet, und einen Mantel (108), der die Wand umgibt und die seitliche Wand oder die seitlichen Wände des rohrförmigen Elements umgibt, wobei der Rand (124, 134) des Organs zur elektrischen Isolierung eine Höhe aufweist, die größer als oder gleich wie die Höhe des Mantels des Deckels der Einheit ist.

10. Verfahren zur Herstellung eines Moduls zur Speicherung von Energie (10), umfassend eine Vielzahl von Einheiten zur Speicherung von Energie (100), die Seite an Seite angeordnet sind, und eine starre Hülle (12), die ausgelegt ist, um die Einheiten zur Speicherung zu umgeben, wobei jede Einheit mindestens eine seitliche Wand umfasst, und an jedem Ende der seitlichen Wand durch eine äußere Seite geschlossen ist, wobei das Verfahren die folgenden Schritte umfasst:
- elektrisches Verbinden der Einheiten zur Speicherung (100) zu zweit durch leitende Spangen (110), die sich jeweils auf mindestens einer äußeren Seite jeder Einheit erstrecken, so dass eine Spange eine erste äußere Seite von mindestens einer vorbestimmten Einheit mit einer ersten benachbarten Einheit verbindet, und dass eine zweite Spange eine zweite Seite der vorbestimmten Einheit mit einer zweiten benachbarten Einheit verbindet,
- Platzieren von mindestens einem Organ zur elektrischen Isolierung (120), hergestellt aus einem elektrisch isolierenden Material und umfassend einen Boden (122) und einen Rand (124), der sich im Wesentlichen senkrecht zum Boden erstreckt und diesen umgibt, auf den äußeren Seiten von zwei benachbarten Einheiten, die durch die Spange verbunden sind, so dass der Boden parallel zu den äußeren Seiten ist, und dass der Rand entlang der seitlichen Wände der zwei Einheiten verläuft, indem er diese auf mindestens einem Teil der Höhe überlappt.

11. Verfahren nach dem vorhergehenden Anspruch, wobei mindestens eine Einheit (100A, 100B) an einer ihrer äußeren Seiten mit einer Ausgangsklemme (118) des Moduls durch einen Ausgangsverbinder (112) verbunden ist, und ein zusätzliches Organ zur elektrischen Isolierung (130), hergestellt aus einem elektrisch isolierenden Material und umfassend einen Boden (132) und einen Rand (134), der sich im Wesentlichen senkrecht zu Boden erstreckt und diesen umgibt, auf der äußeren Seite der Einheit, verbunden mit der Ausgangsklemme, derart platziert wird, dass der Boden parallel zur äußeren Seite ist, und dass der Rand entlang der seitlichen Wand der Einheit verläuft, indem er diese auf mindestens einem Teil seiner Höhe überlappt.

12. Verfahren nach dem vorhergehenden Anspruch, wobei eine Isolierplatte (140, 142) zwischen mindestens eine Spange (110) oder einen Ausgangsverbinder (112) und das assoziierte Organ zur elektrischen Isolierung (120, 130) gestellt wird.

## Claims

1. Energy storage module (10) comprising a plurality of energy storage assemblies (100) positioned side by side, and a rigid enclosure (12) intended for surrounding the storage assemblies, each assembly including at least one side wall closed at each end by an end surface, wherein the storage assemblies are electrically connected in pairs by conductive strips (110) extending over at least one end surface of each assembly, the strips being arranged such that one strip connects a first end surface of at least one predetermined assembly to an end surface of a first adjacent assembly and a second strip connects a second surface of the predetermined assembly to an end surface of a second adjacent assembly, **characterised in that** the module also includes at least one electrically insulating member (120), made of an electrically insulating material and comprising a bottom (122) and a rim (124) extending essentially perpendicular to the bottom and surrounding same, each electrically insulating member (120) being associated with a strip (110) and fitted onto the end surfaces of two adjacent assemblies connected by the strip such that the bottom is parallel to the end surfaces and the rim runs alongside the side walls of the two assemblies while overlapping same over at least a portion of the height thereof.

2. Module according to the previous claim, comprising at least one assembly (100A, 100B) connected at one of the end surfaces thereof to an output terminal (118) of the module via an output connector (112), the module further including at least one additional electrically insulating member (130) associated with the output connector (112), made of an electrically insulating material and comprising a bottom (132) and a rim (134) extending essentially perpendicular to the bottom and surrounding same, the additional electrically insulating member being fitted onto the end surface of the assembly connected to the output terminal such that the bottom is parallel to said end surface and the rim runs alongside the side wall of the assembly while overlapping same over at least a portion of the height thereof.

3. Module according to the previous claim, wherein the output connector (112) is configured in an L-shape, a first wall (114) of the connector running alongside the end surface of the assembly and a second perpendicular wall (116) bearing the output terminal (118), the additional electrically insulating member (130) being configured such that it surrounds the assembly and the output connector such that the rim (134) thereof runs alongside the side wall of the assembly and the second wall of the connector.

4. Module according to the previous claim, wherein the rim (134) of the additional electrically insulating member is configured such that it does not overlap the output terminal (118).

5. Module according to any of the previous claims, comprising a total number of insulating members (120, 130) that is greater than half of the number of storage assemblies (100) of the module, and in particular is equal to the number of assemblies of the module increased by 1.

6. Module according to any of the previous claims, wherein the one or at least one of the electrically insulating members (120, 130) is made of a plastic material, in particular a thermoplastic material such as polypropylene.

7. Module according to any of the previous claims, wherein a plate (140, 142) made of a thermally insulating material, in particular made of EPDM, is inserted between the strip (110) or the output connector (112) and the associated electrically insulating member (120, 130).

8. Module according to any of the previous claims, wherein at least one assembly comprises a tubular element (104) including the one or more side walls and open at at least one of the ends thereof, and a lid (106) forming an end surface of the assembly and closing the end or one end of the tubular element.

9. Module according to the previous claim, wherein the lid (106) comprises a wall forming the end surface and a skirt (108) surrounding said wall and surrounding the one or more side walls of the tubular element, the rim (124, 134) of the electrically insulating member having a height that is greater than or equal to the height of the skirt of the lid of the assembly.

10. Method for manufacturing an energy storage module (10) comprising a plurality of energy storage assemblies (100) positioned side by side, and a rigid enclosure (12) intended for surrounding the storage assemblies, each assembly including at least one side wall and closed at each end of the side wall by an end surface, the method comprising the steps of:
- electrically connecting the storage assemblies (100) in pairs by conductive strips (110) respectively extending over at least one end surface of each assembly, such that one strip connects a first end surface of at least one predetermined assembly to a first adjacent assembly and a second strip connects a second surface of the predetermined assembly to a second adjacent assembly,
- placing at least one electrically insulating member (120), made of an electrically insulating material and comprising a bottom (122) and a rim (124) extending essentially perpendicular to the bottom and surrounding same, onto the end surfaces of two adjacent assemblies connected by the strip such that the bottom is parallel to the end surfaces and the rim runs alongside the side walls of the two assemblies while overlapping same over at least a portion of the height thereof.

11. Method according to the previous claim, wherein at least one assembly (100A, 100B) is connected at one of the end surfaces thereof to an output terminal (118) of the module via an output connector (112), and an additional electrically insulating member (130), made of an electrically insulating material and comprising a bottom (132) and a rim (134) extending essentially perpendicular to the bottom and surrounding same, is placed onto the end surface of the assembly connected to the output terminal such that the bottom is parallel to the end surface and the rim runs alongside the side wall of the assembly while overlapping same over at least a portion of the height thereof.

12. Method according to the previous claim, wherein an insulating plate (140, 142) is inserted between at least one strip (110) or one output connector (112) and the associated electrically insulating member (120, 130).
